# EUROPEAN PATENT SPECIFICATION

(11) **EP 2 503 633 B1**
(45) Date of publication and mention of the grant of the patent: **13.08.2014**
(21) Application number: 12160660.2
(22) Date of filing: 22.03.2012
(51) Int. Cl.: H01M 10/0525, H01M 10/0567, H01M 10/0568

(54) **Electrolyte for rechargeable lithium battery and rechargeable lithium battery including the same**
Elektrolyt für wiederaufladbare Lithium-Batterie und wiederaufladbare Lithium-Batterie, der diesen Elektrolyten enthält
Électrolyte pour batterie rechargeable au lithium-ion et batterie rechargeable au lithium-ion l'incluant

(30) Priority: 23.03.2011 US 201161466761 P; 20.03.2012 US 201213424572
(43) Date of publication of application: 26.09.2012
(73) Proprietor: Samsung SDI Co., Ltd., Gyeonggi-do (KR); Robert Bosch GmbH, 70442 Stuttgart (DE)
(72) Inventor: Kwak, Gun-Ho, Gyeonggi-do (KR); Kim, Sung-Hoon, Gyeonggi-do (KR); Kim, Tae-Ahn, Gyeonggi-do (KR); Shin, Bo-Ra, Gyeonggi-do (KR)
(74) Representative: Gulde & Partner

(56) References cited:
- EP-A1- 2 262 047
- EP-A1- 2 498 329
- US-A1- 2008 193 852
- US-A1- 2009 226 808

## Description

The present invention relates to a non-aqueous electrolyte for a rechargeable lithium battery and a rechargeable lithium battery including the same.

### Description of the Related Art

Lithium rechargeable batteries have recently drawn attention as a power source for small portable electronic devices. They use an organic electrolyte and thereby, have twice as high discharge voltage as a conventional battery using an alkaline aqueous solution and accordingly, have high energy density.

The organic electrolyte for a rechargeable lithium battery includes a lithium salt such as LiPF₆ and the like and an organic solvent. The organic solvent is required of low reactivity with lithium, minimum internal resistance for smoothly transferring lithium ions, thermal stability within a vast temperature range, high compatibility with a negative active material, and high dielectric constant dissolving a large amount of a lithium salt. This organic solvent may include cyclic carbonate such as propylene carbonate (PC), ethylene carbonate (EC), and the like; or linear carbonate such as dimethyl carbonate (DMC), diethyl carbonate (DEC), and the like and in addition, a hydrocarbon-based solvent such as 1,2-dimethoxyethane, diethoxyethane, and the like.

The PC among the organic solvents has a low melting point of -49°C and thus, excellent low temperature characteristics and has good compatibility with amorphous carbon and a high dielectric constant and thus, can dissolve a large amount of an inorganic lithium salt. However, the PC has high viscosity. When it is used with a crystalline carbon-based negative active material such as graphite, it is inserted between carbon layers of a negative electrode during the charge and decomposed, producing propylene gas and lithium carbonate. As a result, it may decrease battery capacity and increase irreversible capacity. This irreversible capacity is primarily generated due to structural characteristics of carbon and may vary depending on reduction degree of an electrolyte on the interface of lithium with carbon and formation degree of an electrolyte protection layer on the surface of carbon. On the other hand, the EC does not react with a graphite-based negative active material and may be easily applied to a battery including crystalline carbon as a negative electrode.

In addition, it has a high dielectric constant and may dissolve a large amount of lithium salt. However, the EC has high viscosity and a high melting point of about 36°C and thus, may not secure low temperature performance. In addition, linear carbonate such as DMC, DEC, and the like has small viscosity and is easily intercalated among negative active materials and thus, decreases irreversible capacity of a battery. It has small reactivity with lithium and a low dielectric constant and thus, cannot dissolve a large amount of lithium salt. In particular, the DMC has high electric conductivity and may be used for a high current and high voltage battery. However, it has a high melting point and thus, bad (4.6°C) low temperature characteristics. In addition, an organic solvent such as dimethyl formamide, acetonitrile, and the like may have a high dielectric constant but large reactivity with lithium and thus, may not substantially be used.

Accordingly, in order to supplement drawback of each electrolyte solvent, a method of mixing at least one of organic solvents has been recently suggested. For example, DEC with good low temperature characteristics may be added to EC/DEC. However, since the mixtures do not only sufficiently improve low temperature characteristics but also has a low active material decomposition temperature and a high heating value, when it is applied to a battery, battery safety may not be secured.

EP 2 262 047 A1 provides an non-aqueous electrolyte including tris(trimethylsilyl) phosphate or tris(trimethylsilyl) borate as an additive. US 2008/0193852 A1 discloses another non-aqueous electrolyte for a secondary battery including lithium difluoro(oxalato)borate (LiFOB) or lithium bis(oxalato)borate (LiBOB) as an additive.

### SUMMARY OF THE INVENTION

One aspect of the present invention provides a non-aqueous electrolyte for a rechargeable lithium battery, which has a less side reaction, good film characteristics, and excellent high temperature safety and thus, may improve low temperature characteristics of a rechargeable lithium battery and its cycle-life when allowed to stand at a high temperature.

Another aspect of the present invention provides a rechargeable lithium battery including the non-aqueous electrolyte.

According to one aspect of the present invention there is provided a non-aqueous electrolyte for a rechargeable lithium battery comprising a lithium salt; and a non-aqueous organic solvent. The non-aqueous electrolyte further comprises a first additive and a second additive included at a weight ratio of 1:5 to 3:1, preferred 1 : 4 to 2 : 1, most preferred 1 : 2 to 2 : 1.

The first additive is one or more compound selected from group comprising tris(trimethylsilyl)phosphite; tris(triethylsilyl)phosphite, tris(trimethylsilyl)phosphate, tris(triethylsilyl)phosphate, tris(trimethylsilyl)borate, tris(triethylsilyl)borate, trimethylsilylphosphite, triethylsilylphosphite, trimethylsilylphosphate, triethylsilylphosphate, trimethylsilylborate, and triethylsilylborate. Most preferred, the first additive is tris(trimethylsilyl)phosphite or tris(trimethylsilyl)borate.

The first additive may be included in an amount of 0.1 to 10 part per weight based on 100 parts per weight of the non-aqueous organic solvent.

The second additive is lithium difluorobis(oxalato)phosphate.

The second additive may be included in an amount of 0.05 to 10 parts per weight based on 100 parts per weight of the non-aqueous organic solvent.

The lithium salt may be included in a concentration ranging from 0.1M to 2M.

The non-aqueous organic solvent may include a carbonate-based, ester-based, ether-based, ketone-based, alcohol-based, or aprotic solvent.

According to another aspect of the present invention, there is provided a rechargeable lithium battery including the above mentioned non-aqueous electrolyte.

The non-aqueous electrolyte may have a less side reaction, good film characteristics, and excellent high temperature safety and thus, can improve low temperature characteristics of a rechargeable lithium battery and its cycle-life when allowed to stand at a high temperature.

### BRIEF DESCRIPTION OF THE DRAWING

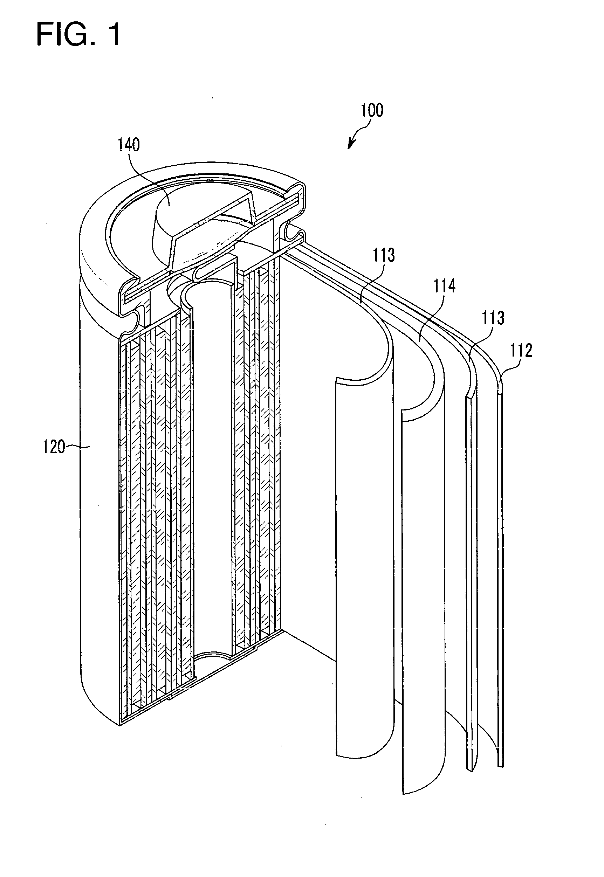

FIG. 1 is a schematic view showing a rechargeable lithium battery according to one embodiment.

### DETAILED DESCRIPTION

Exemplary embodiments of the present invention will hereinafter be described in detail.

As a rechargeable lithium battery is charged and discharged, a substrate is repetitively contracted and expanded and partially applied with over-voltage. As a result, a passivation layer such as a solid electrolyte interface (SEI) layer may slowly collapse as time goes, which may continuously cause the side reaction of an electrolyte with the surface of a negative electrode exposed thereto. Herein, gas such as CO, CO₂, CH₄, C₂H₆, and the like is generated depending on kinds of carbonate used as a non-aqueous electrolyte solvent and a negative active material and thus, increases internal pressure of a battery, remarkably deteriorating its cycle characteristics. In addition, as the carbonate-based electrolyte is decomposed depending on a graphite-based negative active material, and a carbon material is delaminated, a battery may have resultantly deteriorated electrical capacity or cycle characteristics, storage characteristics, low temperature characteristics, and the like.

The non-aqueous electrolyte according to the present invention includes at least two additives in an optimal ratio and has a less side reaction, good film characteristics, and excellent high temperature safety and thus, can improve low temperature characteristics of a rechargeable lithium battery and its cycle-life when allowed to stand at a high temperature.

In other words, a non-aqueous electrolyte for a rechargeable lithium battery according to the present invention includes a first additive for improving low temperature and power characteristics of a rechargeable lithium battery without deteriorating its allowed-to-stand characteristics; a second additive for improving power characteristics; a lithium salt; and a non-aqueous organic solvent. The first and second additives are included at a weight ratio ranging from 1:5 to 3:1, especially 1:4 to 2:1.

When the first additive is extremely included, it may much increase layer resistance of a negative electrode and thus, deteriorate power characteristics of a cell. When the second additive is extremely included, it may deteriorate allowed-to-stand characteristics of a cell. Accordingly, the first additive may be included in an amount ranging from 0.1 to 10 parts by weight, and the second additive may be included in an amount ranging from 0.05 to 10 parts by weight. The first and second additives are included at a weight ratio ranging from 1:5 to 3:1, especially1:4 to 2:1 and in one embodiment from 2:1 to 1:2.

Hereinafter, each component is illustrated in detail.

### First Additive

The first additive is not electrochemically reduced in all potential ranges but removes radical negative ions, an intermediate for the solvent reduction, or is combined with a final product such as lithium alkyl dicarbonate, lithium alkoxide, and the like and thus, forms a more stable SEI layer, resultantly improving low temperature and power characteristics of a rechargeable lithium battery and its cycle-life when allowed to stand at a high temperature.

The first additive is selected from tris(trimethylsilyl)phosphite, tris(triethylsilyl)phosphite, tris(trimethylsilyl)phosphate, tris(triethylsilyl)phosphate, tris(trimethylsilyl)borate, tris(triethylsilyl)borate, trimethylsilylphosphite, triethylsilylphosphite, trimethylsilylphosphate, triethylsilylphosphate, trimethylsilylborate, triethylsilylborate, and a mixture thereof.

The first additive may be included in an amount of 0.1 to 10 parts per weight based on 100 parts per weight of the non-aqueous organic solvent. When the first additive is included within the range, good films having relatively low resistance on a negative electrode Is formed resulting in improvement of power and low temperature characteristics

### Second Additive

An SEI layer formed of a LiPF₆-carbonate-based electrolyte includes Li₂CO₃, LiF, and the like. The LiF crystal may make the SEI layer unstable. Accordingly, the second additive removes LiF from a SEI layer and stabilizes the SEI layer and thus, improves power characteristics of a rechargeable lithium battery.

The second additive is lithium difluorobis(oxalato)phosphate.

The second additive may be included in an amount of 0.05 to 10 parts by weight, especially 0.05 to 5 parts by weight based on 100 parts per weight of the non-aqueous organic solvent. When the second additive is included within the range, good films having relatively low resistance on a negative electrode is formed resulting in improvement of power and low temperature characteristics.

### Lithium Salt

The lithium salt is dissolved in the non-aqueous organic solvent and works as a lithium ion source inside a battery and thus, basically operates a rechargeable lithium battery and promotes lithium ion transfer between positive and negative electrodes. Non-limiting examples of the lithium salt may include LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (herein, x and y are a natural number), LiCl, Lil, LiB(C₂O₄)₂ (lithium bis(oxalato) borate; LiBOB), or a mixture thereof, and a supporting electrolytic salt. The lithium salt may be included in a concentration ranging from 0.1M to 2M. When it is used within the concentration range, an electrolyte may have appropriate conductivity and viscosity and thus, bring about excellent electrolyte performance and effectively promotes lithium ion transfer.

### Non-aqueous Organic Solvent

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent may include methyl acetate, ethyl acetate, n-propyl acetate, methylpropionate, ethylpropionate, y-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone and the like. Examples of the alcohol-based solvent include ethyl alcohol, isopropyl alcohol, and the like, and examples of the aprotic solvent include nitriles such as R-CN (where R is a C2 to C20 linear, branched, or cyclic hydrocarbon group that optionally include a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio can be controlled in accordance with a desirable battery performance.

The carbonate-based solvent may include a mixture of a cyclic carbonate and a linear carbonate. The cyclic carbonate and the linear carbonate are mixed together in the volume ratio of about 1:1 to about 1:9. When the mixture is used as an electrolyte, the electrolyte performance may be enhanced.

In addition, the non-aqueous organic electrolyte may further include mixtures of carbonate-based solvents and aromatic hydrocarbon-based solvents. The carbonate-based solvents and the aromatic hydrocarbon-based solvents may be mixed together in a volume ratio of about 1:1 to about 30:1.

The aromatic hydrocarbon-based organic solvent may be an aromatic hydrocarbon-based compound represented by the following Chemical Formula 5.

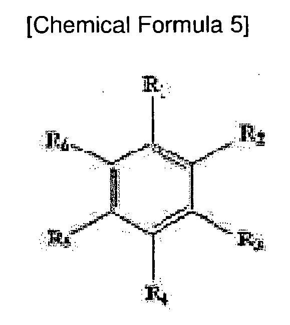

In Chemical Formula 5, R₁ to R₆ are independently hydrogen, a halogen, a C1 to C10 alkyl group, a C1 to C10 haloalkyl group, or a combination thereof.

The aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and a combination thereof.

The non-aqueous electrolyte may further include vinylene carbonate or an ethylene carbonate-based compound represented by the following Chemical Formula 6 to improve cycle-life of a battery.

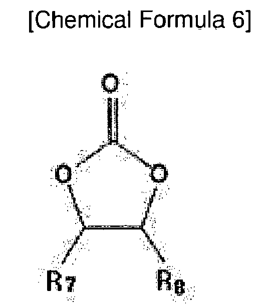

In the above Chemical Formula 6, R₇ and R₈ are each independently selected from hydrogen, a halogen group, a cyano (CN) group, a nitro (NO₂) group, and a fluorinated C1 to C5 alkyl group, and at least either of the R₇ and R₈ may be selected from a halogen group, a cyano (CN) group, a nitro (NO₂) group, and a fluorinated C1 to C5 alkyl group, but both of the R₇ and R₈ are not hydrogen.

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. When the additive is added to improve cycle-life, it may be appropriately adjusted in its use amount.

In one embodiment, the non-aqueous organic solvent may include ethylene carbonate : a mixed solvent of ethylmethyl carbonate and dimethyl carbonate at a weight ratio ranging from 20:80 to 80:20.

When the non-aqueous electrolyte has the above composition, small side reactions, good film characteristics, and excellent high temperature safety are provided, resultantly improving the low temperature characteristics of a rechargeable lithium battery and its cycle-life when allowed to stand at a high temperature.

According to another embodiment of the present invention, provided is a rechargeable lithium battery including the non-aqueous electrolyte.

A rechargeable lithium battery is classified into a lithium ion battery, a lithium ion polymer battery, and a lithium polymer battery depending on kinds of a separator and an electrolyte, into a prismatic, cylindrical, coin-type, pouch, and the like depending on a shape, and into a bulk type, thin film type, and the like depending on a size. The structure of a battery and a method of manufacturing the battery are well-known in this field and will not be illustrated in detail.

FIG. 1 is an exploded perspective view showing a rechargeable lithium battery according to one embodiment of the present invention. Referring to FIG. 1, the rechargeable lithium battery 100 has a cylindrical shape and includes a negative electrode 112, a positive electrode 114 and a separator 113 interposed between the negative electrode 112 and the negative electrode 114, an electrolyte (not shown) impregnating the negative electrode 112, the positive electrode114, and the separator 113, a battery container 120, and a sealing member 140 sealing the battery container 120. The rechargeable lithium battery 100 is fabricated by sequentially laminating the negative electrode 112, the positive electrode 114, and the separator 113 therebetween, spirally winding the laminated product, and housing the wound product in a battery container 120.

The negative electrode 112 may include a current collector and a negative active material layer on the current collector. The negative active material layer may be formed of a negative active material.

The negative active material may include a material that can reversibly intercalate/deintercalate lithium ions, lithium metal, an alloy of the lithium metal, a material that can dope and dedope lithium, or a transition metal oxide.

The material that can reversibly intercalate/deintercalate lithium ions may be a carbon material and may include any generally-used carbon-based negative active material used for a lithium ion secondary battery. For example, it may include crystalline carbon, amorphous carbon, or a combination thereof. Examples of the crystalline carbon may include amorphous, plate, flake, and spherical shapes or graphite such as fiber-type natural graphite or artificial graphite. The amorphous carbon may include soft carbon, hard carbon, a mesophase pitch carbonization product, fired coke, and the like.

The alloy of a lithium metal may include an alloy of lithium with a metal such as Na, K, Rb, Cs, Fr, Be, Mg, Ca, Sr, Si, Sb, Pb, In, Zn, Ba, Ra, Ge, Al, or Sn.

The material that dopes and dedopes lithium may be Si, SiOₓ (0 < x < 2), a Si-X1 alloy (the X1 may be an alkali metal, an alkaline-earth metal, Group 13 to 16 element, a transition element, a rare earth element, or a combination thereof but is not Si), Sn, SnO₂, a Sn-X2 alloy (the X2 may be an alkali metal, an alkaline-earth metal, Group 13 to 16 element, a transition element, a rare earth element, or a combination thereof but is not Sn), and the like and also, a mixture of at least thereof with SiO₂. The specific element of X1 and X2 may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may include vanadium oxide, lithium vanadium oxide, and the like.

The negative active material layer may also include a binder and selectively, a conductive material.

The binder may play a role of adhering negative active material particles one another and a negative active material to a current collector. Examples of the binder may include polyvinyl alcohol, carboxylmethylcellulose, hydroxypropylcellulose, polyvinylchloride, carboxylized polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like.

The conductive material is used to apply conductivity to an electrode and may include any electronic conductive material unless it causes any chemical change and for example, include a carbon-based material such as natural graphite, artificial graphite, carbon black, acetylene black, ketjen black, a carbon fiber, and the like; a metal-based material such as metal powder, metal fiber, or the like including a metal such as copper, nickel, aluminum, silver, and the like; a conductive polymer such as a polyphenylene derivative, and the like; or a mixture thereof.

The current collector may include a copper film, a nickel film, a stainless steel film, a titanium film, nickel foam, copper foam, a polymer substrate coated with a conductive metal, or a combination thereof.

The positive electrode 114 may include a current collector and a positive active material layer formed on the current collector.

The positive active material may include a compound that can reversibly intercalate and deintercalate lithium (a lithiated intercalation compound). In particular, at least one composite oxide of a metal selected from cobalt, manganese, nickel, or a combination thereof with lithium may be used. For example, the composite oxide may include a compound represented by the following Chemical Formulae: LiₐW_{1-b}R_{b}D₂ (wherein, in the above Chemical Formula, 0.90 ≤ a ≤ 1.8 and 0 ≤ b ≤ 0.5); LiₐE_{1-b}R_{b}O_{2-c}D_{c} (wherein, in the above Chemical Formula, 0.90 ≤ a 1.8, 0 ≤ b ≤ 0.5 and 0 ≤ c ≤ 0.05); LiE_{2-b}R_{b}O_{4-c}D_{c} (wherein, in the above Chemical Formula, 0 ≤ b ≤ 0.5, 0 ≤ c ≤ 0.05); LiₐNi_{1-b-c}Co_{b}R_{c}D_{α}(wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α}(wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α}(wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α}(wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ wherein, in the above Chemical Formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above Chemical Formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above Chemical Formula, 0.90 ≤ a ≤ 1.8, 0 ≤ b ≤ 0.9, 0 ≤ c ≤ 0.5, 0 ≤ d ≤0.5 and 0.001 ≤ e ≤ 0.1); LiₐNiG_{b}O₂ (wherein, in the above Chemical Formula, 0.90 ≤ a ≤ 1.8 and 0.001 ≤ b ≤ 0.1); LiₐCoG_{b}O₂ (wherein, in the above Chemical Formula, 0.90 ≤ a ≤ 1.8 and 0.001 ≤ b ≤ 0.1); LiₐMnG_{b}O₂ (wherein, in the above Chemical Formula, 0.90 ≤ a ≤ 1.8 and 0.001 ≤ b ≤ 0.1); LiₐMn₂G_{b}O₄ (wherein, in the above Chemical Formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃(0 ≤ f ≤ 2); and LiFePO₄.

In the above Chemical Formulae, W is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The compound may have a coating layer on the surface or mixed with a compound with a coating layer. The coating layer may include an oxide of a coating element, hydroxide, oxyhydroxide of a coating element, oxycarbonate of a coating element, or hydroxy carbonate of a coating element. The compound forming a coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be formed in any method unless it has a bad influence on properties of a positive active material by using these elements in the compound (e.g. spray coating and dip coating), which will be understood for those who work in a relate field and will be illustrated in more detail.

The positive active material layer may include a binder and a conductive material.

The binder plays a role of adhering positive active material particles and a positive active material to a current collector and for example, includes polyvinylalcohol, carboxylmethylcellulose, hydroxypropylcellulose, diacetylcellulose, a polymer including polyvinylchloride, carboxylized polyvinylchloride, polyvinylfluoride, polyvinylpyrrolidone including ethylene oxide, polyurethane, polytetrafluoroethylene, polyvinylidene fluoride, polyethylene, polypropylene, a styrene-butadiene rubber, an acrylated styrene-butadiene rubber, an epoxy resin, nylon, and the like.

The conductive material is used to apply conductivity to an electrode and may include any electronic conductive material having no chemical change, for example, natural graphite, artificial graphite, carbon black, acetylene black, ketjen black, carbon fiber; a metal powder or metal fiber including a metal such as copper, nickel, aluminum, silver, and the like; and the like and also, a polyphenylene derivative and the like in a singular or a mixture of more than two.

The current collector may include Al.

The negative and positive electrodes 112 and 114 are fabricated by mixing an active material, a conductive material, and a binder in a solvent to prepare an active material composition and coating the composition on a current collector. The method of manufacturing an electrode is well-known in this related field and will not be illustrated in detail. The solvent may include N-methylpyrrolidone, and the like.

The electrolyte is the same as aforementioned.

A rechargeable lithium battery may include a separator 113 between a positive electrode 114 and a negative electrode 112. The separator 113 may include polyethylene, polypropylene, polyvinylidene fluoride or a multilayer thereof and in addition, a mixed multilayer such as a double-layered polyethylene/polypropylene separator, a triple-layered polyethylene/polypropylene/polyethylene separator, a triple-layered polypropylene/polyethylene/polypropylene separator, and the like.

Hereinafter, illustrated are Examples and Comparative Examples of the present invention.

### Examples 1-1 to 1-4 and Comparative Examples 1-1 and 1-2: Preparation of a non-aqueous electrolyte

A non-aqueous electrolyte was prepared by mixing ethylene carbonate (EC), ethylmethyl carbonate (EMC), and dimethyl carbonate (DMC) according to the contents provided in the following Table 1, adding the first and second additives thereto, and then, dissolving a lithium salt therein. The second additive was lithium difluorobis(oxalato)phosphate.

**Table 1**

| | Solvent (parts by weight) | | | Lithium salt (M) | First additive (parts by weight) | | Second additive (parts by weight) |
|---|---|---|---|---|---|---|---|
| | EC | EMC | DMC | LiPF₆ | TMSPi | TMSB | |
| Comparative Example 1-1 | 20 | 40 | 40 | 1.15 | - | - | 1 |
| Comparative Example 1-2 | 20 | 40 | 40 | 1.15 | - | - | 2 |
| Example 1-1 | 20 | 40 | 40 | 1.15 | - | 0.5 | 1 |
| Example 1-2 | 20 | 40 | 40 | 1.15 | - | 0.5 | 2 |
| Example 1-3 | 20 | 40 | 40 | 1.15 | 2 | - | 1 |
| Example 1-4 | 20 | 40 | 40 | 1.15 | - | 1 | 1 |

In Table 1, EC denotes ethylene carbonate, EMC denotes ethylmethyl carbonate, DMC denotes dimethyl carbonate, TMSPi denotes tris(trimethylsilyl)phosphite, and TMSB denotes tris(trimethylsilyl)borate.

### Examples 2-1 to 2-4 and Comparative Examples 2-1 and 2-2: Fabrication of rechargeable lithium battery cells

Positive slurry was prepared by mixing LiCoO₂ as a positive active material, polyvinylidene fluoride (PVDF) as a binder, and carbon as a conductive material at a weight ratio of 92:4:4 and adding N-methyl-2-pyrrolidone to the mixture. The positive slurry was coated on a 20µm-thick aluminum foil as a current collector and then, dried and compressed in a 120°C vacuum oven, fabricating a positive electrode.

On the other hand, negative electrode slurry was prepared by crystalline artificial graphite as a negative active material and PVDF as a binder at a weight ratio of 92:8 and dispersing N-methyl-2-pyrrolidinone into the mixture. The negative electrode slurry was coated on a 15µm-thick copper as a current collector and then, dried and compressed in a 120°C vacuum oven, fabricating a negative electrode.

Then, a 25µm-thick polyethylene porous separator was interposed between the positive and negative electrodes, fabricating an electrode assembly. The electrode assembly was wound and compressed and then, housed in a prismatic can. The non-aqueous electrolytes according to Examples 1-1 to 1-4 and Comparative Examples 1-1 and 1-2 were respectively injected in the cans. The cans were sealed, fabricating rechargeable lithium battery cells according to Examples 2-1 to 2-4 and Comparative Examples 2-1 and 2-2.

### Experimental Examples

The battery cells according to Examples 2-1 to 2-4 and Comparative Examples 2-1 and 2-2 were evaluated. The results are provided in the following Table 2.

Specifically, a power at a room temperature (Pᵣ) power was measured as follows: the battery cells according to Examples 2-1 to 2-4 and Comparative Examples 2-1 and 2-2 were charged with various currents and a charge voltage ranging from 4.2V or 4.35V under CC-CV condition, and discharged at IC up to 2.75V.

The following power at a room temperature (Pᵣ) was represented as a percentage relative to the power at charge (587W) and the power at discharge (875W) of the battery cell according to Comparative Example 2-1..

The power at a low temperature (Pₗ) was measured in a -30°C thermo-chamber according to the same method as at a room temperature. The following power at a room temperature (Pₗ) was represented as a percentage relative to the power at charge (38W) and the power at discharge (96W) of the battery cell according to Comparative Example 2-1.

A power retention rate after storing a battery cell at 85°C for 6 days is obtained by measuring ratios of the powers at a room temperature again after storing the battery cells at 85°C for 6 days relative to powers of battery cells at a room temperature.

**Table 2**

| | Power at a room temperature (Pᵣ) | | Power at a low temperature (Pₗ) | | Power retention rate after being stored at 85°C for 6 days | |
|---|---|---|---|---|---|---|
| | charge | discharge | charge | discharge | charge | discharge |
| Comparative Example 2-1 | 100% | 100% | 100% | 100% | 81.1% | 73.6% |
| Comparative Example 2-2 | 96% | 95% | 89% | 97% | 89.7% | 83.0% |
| Example 2-1 | 101% | 102% | 112% | 115% | 98.5% | 84.2% |
| Example 2-2 | 100% | 101% | 94% | 108% | 96% | 91% |
| Example 2-3 | 99% | 99% | 115% | 111% | 105.8% | 86.7% |
| Example 2-4 | 99% | 99% | 113% | 123% | 98.5% | 84.2% |

As shown in Table 2, the battery cells according to Examples 2-1 to 2-4 had excellent low temperature power characteristics and being allowed-to-stand characteristics compared with the ones according to Comparative Examples 2-1 and 2-2.

## Claims

1. A non-aqueous electrolyte for a rechargeable lithium battery comprising:
- a first additive selected from the group comprising tris(trimethylsilyl)phosphite, tris(triethylsilyl)phosphite, tris(trimethylsilyl)phosphate, tris(triethylsilyl)phosphate, tris(trimethylsilyl)borate, tris(triethylsilyl)borate, trimethylsilylphosphite, triethylsilylphosphite, trimethylsilylphosphate, triethylsilylphosphate, trimethylsilylborate, and triethylsilylborate;
- lithium difluorobis(oxalato)phosphate as a second additive;
- a lithium salt; and
- a non-aqueous organic solvent,
wherein the first and second additives are included at a weight ratio of 1:5 to 3:1.

2. The non-aqueous electrolyte of claim 1, wherein the first additive is tris(trimethylsilyl)phosphite or tris(trimethylsilyl)borate.

3. The non-aqueous electrolyte of any of the preceding claims, wherein the first additive is included in an amount of 0.1 to 10 parts per weight based on 100 parts per weight of the non-aqueous organic solvent.

4. The non-aqueous electrolyte of any of the preceding claims, wherein the second additive is included in an amount of 0.05 to 10 parts per weight based on 100 parts per weight of the non-aqueous organic solvent.

5. The non-aqueous electrolyte of any one of the preceding claims, wherein the weight ratio of the first and second additive is in the range of 1 : 4 to 2 : 1.

6. The non-aqueous electrolyte of claim 5, wherein the weight ratio of the first and second additive is in the range of 1 : 2 to 2 : 1.

7. The non-aqueous electrolyte of any one of the preceding claims, wherein the lithium salt is included in a concentration ranging from 0.1M to 2M.

8. The non-aqueous electrolyte of any one of the preceding claims, wherein the non-aqueous organic solvent includes a carbonate-based, ester-based, ether-based, ketone-based, alcohol-based, or aprotic solvent.

9. A rechargeable lithium battery comprising a non-aqueous electrolyte of any of claims 1 through 8.

## Patentansprüche

1. Nicht-wässriger Elektrolyt für eine wiederaufladbare Lithium-Batterie, aufweisend:
- ein erstes Additiv, das aus der Gruppe bestehend aus Tris(trimethylsilyl)phosphil, Tris(triethylsilyl)phosphit, Tris(trimethylsilyl)phosphat, Tris(triethylsilyl)phosphat, Tris(trimethylsilyl)borat, Tris(triethylsilyl)borat, Trimethylsilylphosphit, Triethylsilylphosphit, Trimethylsilylphosphat, Triethylsilylphosphat, Trimethylsilylborat und Triethylsilylborat ausgewählt ist;
- Lithium-Difluarobis(oxalato)phosphat als zweites Additiv;
- ein Lithiumsalz; und
- ein nicht-wässriges organisches Lösungsmittel,
wobei das erste und zweite Additiv in einem Gewichtsverhältnis von 1:5 bis 3:1 enthalten sind.

2. Nicht-wässriger Elektrolyt nach Anspruch 1, wobei das erste Additiv Tris(trimethylsilyl)phosphit oder Tris(trimethylsilyl)borat ist.

3. Nicht-wässriger Elektrolyt nach einem der vorhergehenden Ansprüche, wobei das erste Additiv in einer Menge von 0,1 bis 10 Gewichtsteilen, bezogen auf 100 Gewichtsteile des nicht-wässrigen organischen Lösungsmittels, enthalten ist.

4. Nicht-wässriger Elektrolyt nach einem der vorhergehenden Ansprüche, wobei das zweite Additiv in einer Menge von 0,05 bis 10 Gewichtsteilen, bezogen auf 100 Gewichtsteile des nicht-wässrigen organischen Lösungsmittels, enthalten ist.

5. Nicht-wässriger Elektrolyt nach einem der vorhergehenden Ansprüche, wobei das Gewichtsverhältnis des ersten und zweiten Additivs im Bereich von 1:4 bis 2:1 liegt.

6. Nicht-wässriger Elektrolyt nach Anspruch 5, wobei das Gewichtsverhältnis des ersten und zweiten Additivs im Bereich von 1:2 bis 2:1 liegt.

7. Nicht-wässriger Elektrolyt nach einem der vorhergehenden Ansprüche, wobei das Lithiumsalz in einer Konzentration im Bereich von 0,1M bis 2M enthalten ist.

8. Nicht-wässriger Elektrolyt nach einem der vorhergehenden Ansprüche, wobei das nicht-wässrige organische Lösungsmittel ein carbonatbasiertes, esterbasiertes, etherbasiertes, ketonbasiertes, alkoholbasiertes oder aprotisches Lösungsmittel aufweist.

9. Wiederaufladbare Lithium-Batterie, aufweisend einen nicht-wässrigen Elektrolyt nach einem der Ansprüche 1 bis 8.

## Revendications

1. Electrolyte non aqueux pour une batterie au lithium rechargeable, comprenant :
- un premier additif choisi dans le groupe comprenant le phosphite de tris(triméthylsilyle), le phosphite de tris(triéthylsilyle), le phosphate de tris-(triméthylsilyle), le phosphate de tris(triéthylsilyle), le borate de tris(triméthylsilyle), le borate de tris(triéthylsilyle), le phosphite de triméthylsilyle, le phosphite de triéthylsilyle, le phosphate de triméthylsilyle, le phosphate de triéthylsilyle, le borate de triméthylsilyle et le borate de triéthylsilyle ;
- du difluorobis(oxalato)phosphate de lithium comme second additif ;
- un sel de lithium ; et
- un solvant organique non aqueux,
dans lequel les premier et second additifs sont incorporés en un rapport pondéral de 1:5 à 3:1.

2. Electrolyte non aqueux suivant la revendication 1, dans lequel le premier additif est le phosphite de tris(triméthylsilyle) ou le borate de tris(triméthylsilyle).

3. Electrolyte non aqueux suivant l'une quelconque des revendications précédentes, dans lequel le premier additif est incorporé en une quantité de 0,1 à 10 parties en poids sur la base de 100 parties en poids du solvant organique non aqueux.

4. Electrolyte non aqueux suivant l'une quelconque des revendications précédentes, dans lequel le second additif est incorporé en une quantité de 0,05 à 10 parties en poids sur la base de 100 parties en poids du solvant organique non aqueux.

5. Electrolyte non aqueux suivant l'une quelconque des revendications précédentes, dans lequel le rapport pondéral des premier et second additifs est compris dans l'intervalle de 1:4 à 2:1.

6. Electrolyte non aqueux suivant la revendication 5, dans lequel le rapport pondéral des premier et second additifs est compris dans l'intervalle de 1:2 à 2:1.

7. Electrolyte non aqueux suivant l'une quelconque des revendications précédentes, dans lequel le sel de lithium est incorporé à une concentration allant de 0,1 M à 2 M.

8. Electrolyte non aqueux suivant l'une quelconque des revendications précédentes, dans lequel le solvant organique non aqueux comprend un solvant à base de carbonate, à base d'ester, à base d'éther, à base de cétone, à base d'alcool ou aprotique.

9. Batterie au lithium rechargeable comprenant un électrolyte non aqueux de l'une quelconque des revendications 1 à 8.
